# EUROPEAN PATENT APPLICATION

(11) **EP 3 531 521 A1**
(43) Date of publication of application: **28.08.2019**
(21) Application number: 19158551.2
(22) Date of filing: 21.02.2019
(51) Int. Cl.: H02G 3/12, H02G 3/06, H02G 3/08, H02G 3/38

(54) **AN ELECTRICITY NETWORK INFRASTRUCTURE OF A ROOM**

(30) Priority: 22.02.2018 IL 257698
(71) Applicant: Genosar, Alon, 820120 Qiryat Gat (IL)
(72) Inventor: Genosar, Alon, 820120 Qiryat Gat (IL)
(74) Representative: Harrison IP Limited

(57) **Abstract**

An electricity network infrastructure of a room comprising: at least one device selected from a group consisting of: a ceiling junction box comprising: a plurality of infrastructure pipe entries; an adapter for connecting one of the pipe entries to an infrastructure pipe; and a bracket connected to each of the adapters, for securing the opposite adapters to each other; a wall terminal box, comprising: at least one hole, wherein the diameter of which corresponds with an external diameter of an infrastructure pipe; a cover, wherein a height of which is salient from a plastering layer on which it is applied; and an angular adapter, comprising: an angular pipe, wherein the entries thereof correspond to an infrastructure pipe; at least one bracket connected to the other end thereof, for securing the angular pipe by a nail to a board on which casting material is poured.

## Description

### TECHNICAL FIELD

The present invention relates to the field of electricity network infrastructure of a room's construction.

### BACKGROUND ART

The term "electricity network" refers herein to a network of pipes disposed therein in a room's walls including its ceiling. The pipes are placed on the walls and ceiling before the plastering stage, and before the casting of the ceiling. The electrical wires of the electricity supplied to the room are disposed inside the pipes later on.

Casting and plastering are not delicate crafts, and as a result the power of the casting material (e.g., concrete in liquid aggregation state) and plastering materials separate the pipes from each other. As a result problems surface later on. For example, when the plastering material hardens, it may block the pipe.

All the methods described above have not yet provided satisfactory solutions to the problem of laying down electric infrastructure of a room.

It is an object of the present invention to provide a solution to the above-mentioned and other problems of the prior art.

Other objects and advantages of the invention will become apparent as the description proceeds.

### SUMMARY OF THE INVENTION

The present invention is directed to an electricity network infrastructure of a room, the infrastructure comprising at least one device selected from a group consisting of:
a ceiling junction box (20) comprising:
   - a plurality of infrastructure pipe entries (22);
   - an adapter (32) for connecting one of the pipe entries (22) to an infrastructure pipe (12); and
   - a bracket (34) connected to each of the adapters (32), for securing the opposite adapters (32) to each other;
a wall terminal box (40), comprising:
   - at least one hole (48), wherein the diameter of which corresponds with an external diameter of an infrastructure pipe (12);
   - a cover (42), wherein a height (26) of which being salient from a plastering layer onto which it is applied;
and an angular adapter (50), comprising:
   - an angular pipe (46), wherein the entries thereof correspond to an infrastructure pipe (12);
   - at least one bracket (34) connected to the other end thereof, for securing the angular pipe (46) by a nail to a board (28) on which casting material is poured.

Preferably, the adapter (32) having a length of at least 5 cm, for preventing unintentional separation of an infrastructure pipe (12) therefrom.

Preferably, the wall terminal box (40) comprises a closure for securing the cover (42) to the wall terminal box (40).

Preferably, the securing of the opposite adapters (32) to each other are carried out by a wire (36).

According to one embodiment of the invention, the casting material is concrete.

Preferably, the pipe (46a) of the angular pipe (46) having a length of at least 5 cm, for preventing unintentional separation of an infrastructure pipe (12) thereof.

According to one embodiment of the invention, the angular pipe (46) is rigid.

According to one embodiment of the invention, the angular adapter (50) further comprises:
- an additional pipe (46c), opposite to a horizontal pipe (46a) of the angular adapter;
- a breakable seal (52) disposed between two of the horizontal pipes, thereby by breaking the seal, changing the adapter from providing an angular conduit functionality to providing a linear conduit functionality;
- wherein an inner diameter of one of the pipes is equal to an external diameter of an opposite pipe thereof, thereby allowing connecting two angular adapters for providing an extended linear conduit.

According to one embodiment of the invention, the cover (42) comprises a perforated facet along the edges thereof, thereby allowing breaking said facet along the perforation line and removing said facet instead of removing the entire cover.

The reference numbers have been used to point out elements in the embodiments described and illustrated herein, in order to facilitate the understanding of the invention. They are meant to be merely illustrative, and not limiting. Also, the foregoing embodiments of the invention have been described and illustrated in conjunction with networks and methods thereof, which are meant to be merely illustrative, and not limiting.

### BRIEF DESCRIPTION OF DRAWINGS

Preferred embodiments, features, aspects and advantages of the present invention are described herein in conjunction with the following drawings:
**Fig. 1** is an electricity network, according to the prior art.
**Fig. 2** is a perspective view on a ceiling junction box 20 of an electricity network, according to the prior art.
**Fig. 3** is a bottom view thereof.
**Fig. 4** is a side view of a ceiling junction box 20, ready for pouring thereon casting material, according to the prior art.
**Fig. 5** s a side view of a ceiling junction box 20, after pouring thereon casting material 30, according to the prior art.
**Fig. 6** is a perspective view of an adapter 32, for connecting two opposite infrastructure pipes 12 of an electricity network, according to one embodiment of the invention.
**Fig. 7** is a side view of a ceiling junction box 20 on which is installed an adapter 32, according to one embodiment of the invention.
**Fig. 8** schematically illustrates a wall terminal box 40, according to the prior art.
**Fig. 9** pictorially illustrates a worker splashing plastering material on a wall, according to the prior art.
**Fig. 10** schematically illustrates a wall terminal box 40 and a cover thereof 42, according to one embodiment of the invention.
**Fig. 11** schematically illustrates a wall terminal box 40 mated with cover thereof 42, according to one embodiment of the invention.
**Fig. 12** schematically illustrates a wall terminal box cover 42, according to one embodiment of the invention.
**Fig. 13** schematically illustrates an infrastructure pipe 12 before pouring thereon plastering material, according to the prior art.
**Fig. 14** schematically illustrates an angular adapter 50, according to one embodiment of the invention.
**Fig. 15** schematically illustrates an angular adapter 50, to which are connected infrastructure pipes 12 at both ends thereof, according to one embodiment of the invention.
**Fig. 16** schematically illustrates an angular adapter 50, according to a further embodiment of the invention.
**Fig. 17** schematically illustrates a longitudinal cross-section thereof.
**Fig. 18** schematically illustrates two angular adapters 50a and 50b connected in line, according to a further embodiment of the invention.
**Fig. 19** schematically illustrates an angular adapter 50 attached to a board before pouring thereon plastering material, according to a further embodiment of the invention.

It should be understood that the drawings are not necessarily drawn to scale.

### DESCRIPTION OF EMBODIMENTS

The present invention will be understood from the following detailed description of preferred embodiments ("best mode"), which are meant to be descriptive and not limiting. For the sake of brevity, some well-known features, methods, networks, procedures, components, circuits, and so on, are not described in detail.

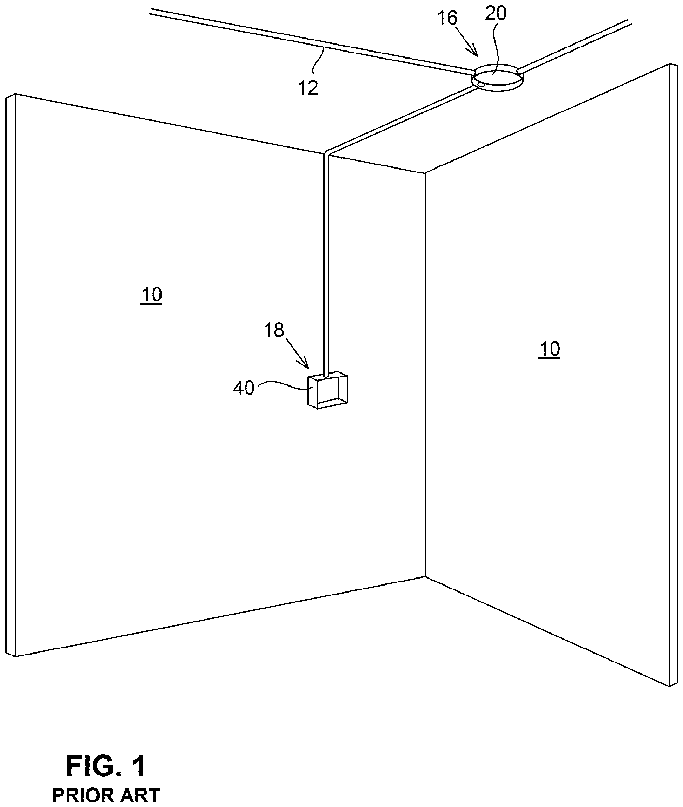

**Fig. 1** is an electricity network, according to the prior art.

At the wall 10 are disposed infrastructure pipes 12, in which later on will be laid down electrical wires 14 (not shown).

The electricity network comprises junctions 16 and terminals 18. On each junction 16 is disposed a junction box 20, and on each terminal 18 is disposed a terminal box 40.

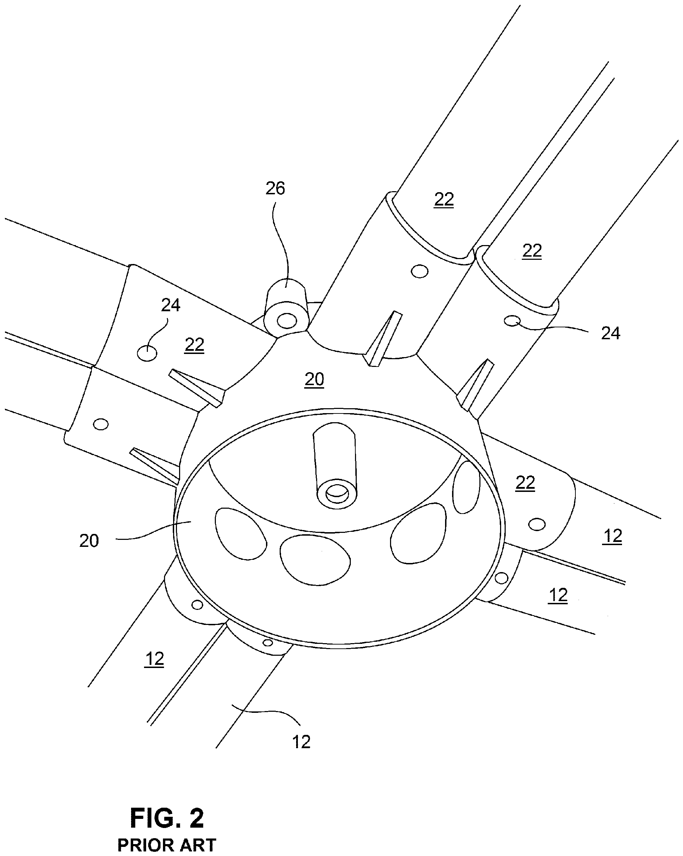

**Fig. 2** is a perspective view on a ceiling junction box 20 of an electricity network, according to the prior art.

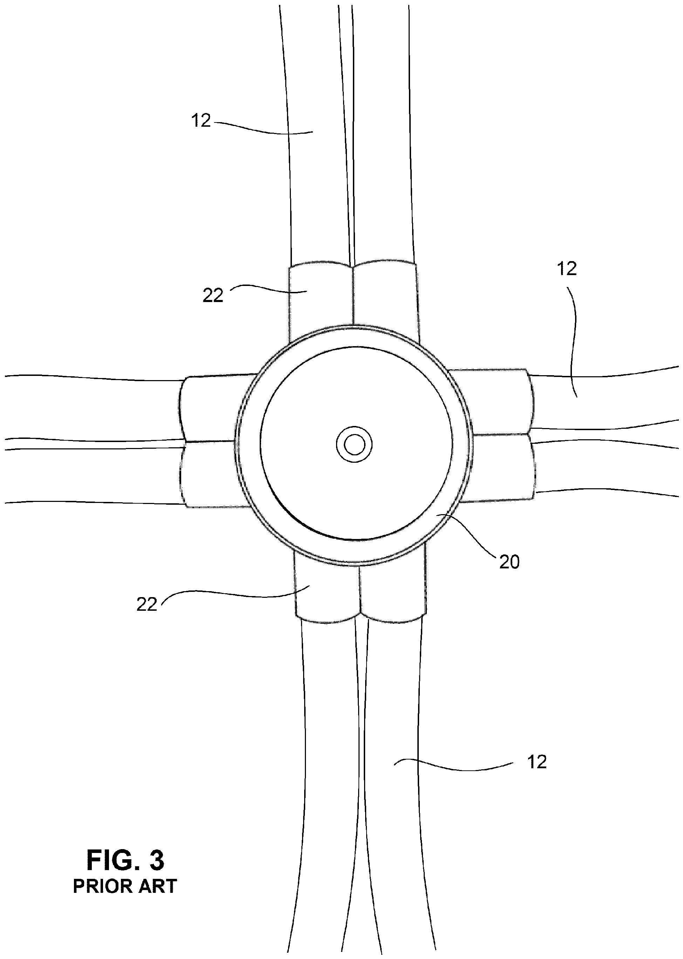

**Fig. 3** is a bottom view thereof.

Infrastructure pipes 12 mate with pipe entry 22 of the ceiling junction box 20. In order to prevent the infrastructure pipe 12 from separating from its corresponding pipe entry 22 upon pouring casting material on the space where the ceiling junction box is disposed, a nail 24 is knocked in each pipe entry 22 while infrastructure pipe 12 is already inserted therein. This action is time consuming, not effective enough when the poured material flow is relatively high, requires extracting the nails after the pouring, and so on.

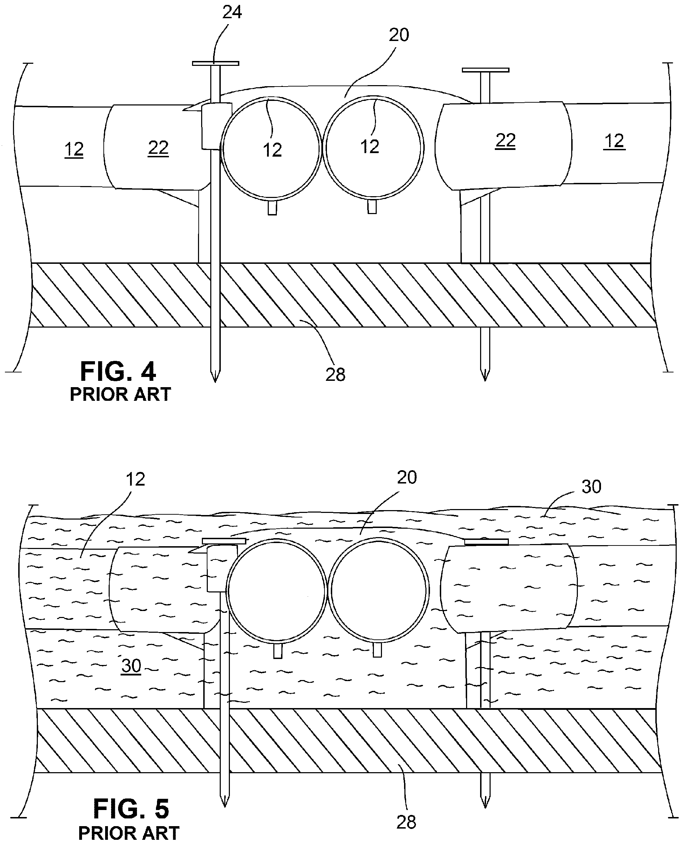

**Fig. 4** is a side view of a ceiling junction box 20, ready for pouring thereon casting material, according to the prior art.

Reference numeral 28 points on a board on which the casting material (e.g., concrete in a liquid state of aggregation) is to be poured.

**Fig. 5** s a side view of a ceiling junction box 20, after pouring thereon casting material 30 (such as concrete), according to the prior art.

The board 28 must be removed after the concrete 30 changes its aggregation state from liquid to solid and the protrusive part of each nail 24 has to be cut off. Thus, concrete 30 becomes the ceiling of the room.

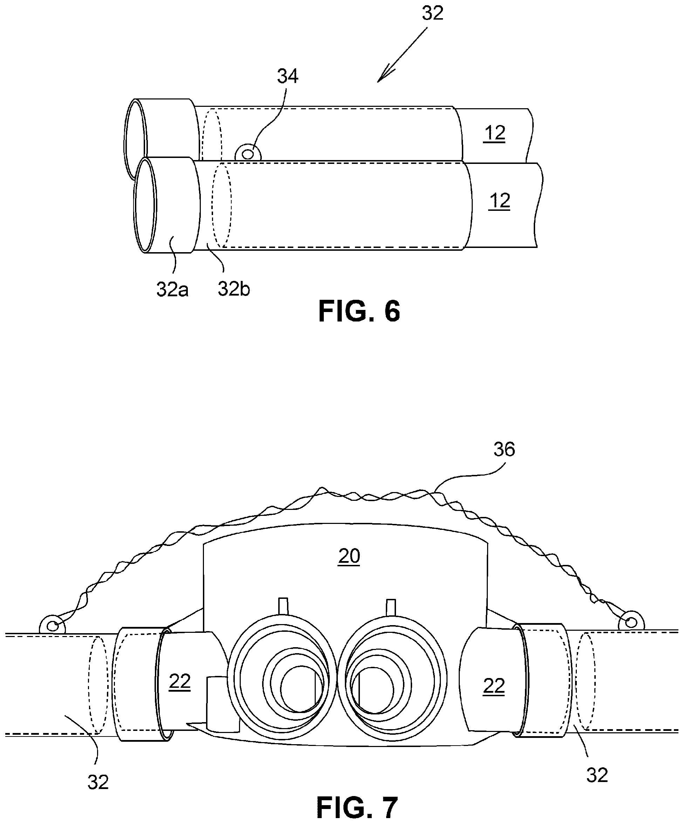

**Fig. 6** is a perspective view of an adapter 32, for connecting two opposite infrastructure pipes 12 of an electricity network, according to one embodiment of the invention.

**Fig. 7** is a side view of a ceiling junction box 20 on which is installed an adapter 32, according to one embodiment of the invention.

For each pipe entry 22 of a ceiling junction box 20, adapter 32 comprises a first pipe 32a, its inner diameter corresponding to the outer diameter of infrastructure pipe 12, and a second pipe 32b, its inner diameter corresponding (i.e., hermetically connects) to the outer diameter of pipe entry 22.

In addition, the adapter 32 comprises a bracket 34 for connecting the adapter to an opposite adapter connected to the opposite set of entries of the ceiling junction box by a wire, chain, etc.

While the length of a pipe entry is about 3 cm, the length of pipe 32b of adapter 32 is at least double, i.e., 6 cm and more. The extra length prevents an infrastructure pipe 12 from separating from the adapter 32 when pouring a liquid (i.e., concrete in liquid aggregation state).

In the examples of Figs. 1 to 7 there are two adjacent pipe entries 22, and therefore adapter 32 also comprises two sets of pipes 32a and 32b, but the adapter may comprise more pairs of pipes 32a and 32b, according to the number of pipes of a ceiling junction box. The sets are connected to each other.

Thus, the adapter 32 of the present invention comprises:
(a) one or more sets of pipes 32a and 32b, longitudinally connected to each other, wherein pipe 32a connects to the pipe entry 22 of a ceiling junction box 20, and pipe 32b connects to an infrastructure pipe 12, wherein the length of the pipe 32b is at least 5 cm; and
(b) a bracket (34), for securing two opposite adapters 32 of ceiling junction box 20 to each other by a connecting wire 36.

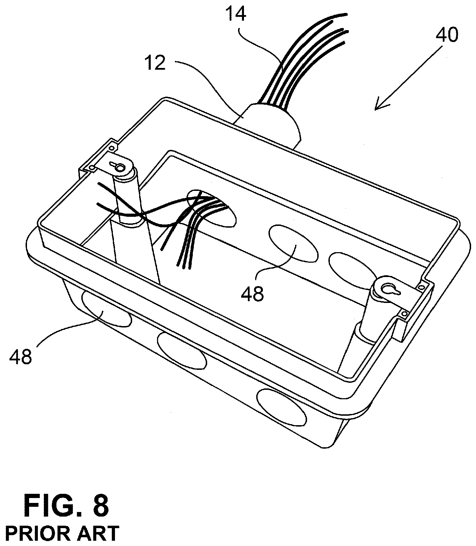

**Fig. 8** schematically illustrates a wall terminal box 40, according to the prior art.

To the wall terminal box 40 are connected infrastructure pipes 12, through which electrical wires 14 pass.

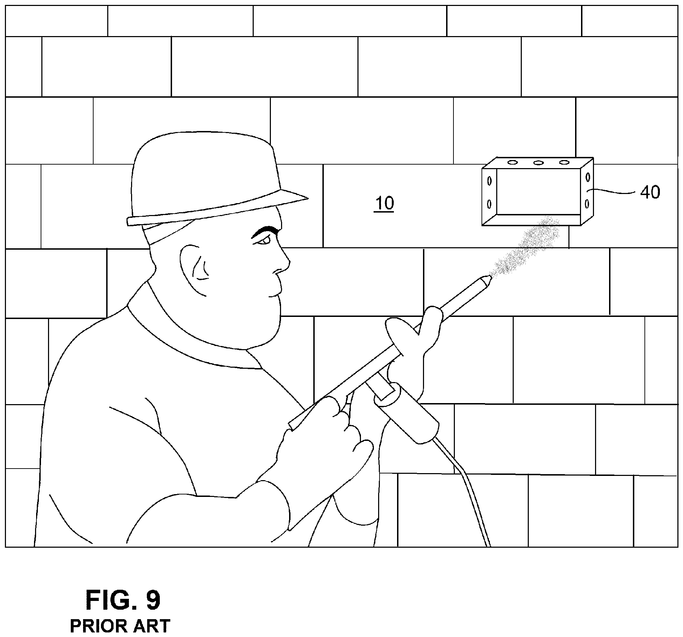

**Fig. 9** pictorially illustrates a worker splashing plastering material on a wall, according to the prior art.

Since the plastering material is splashed using automated means such as a splashing machine, it may cover the wall terminal boxes. One of the ways to detect the covered wall terminal boxes is by taking a photograph before the splashing, and after the splashing to use the photograph to detect the wall terminal boxes.

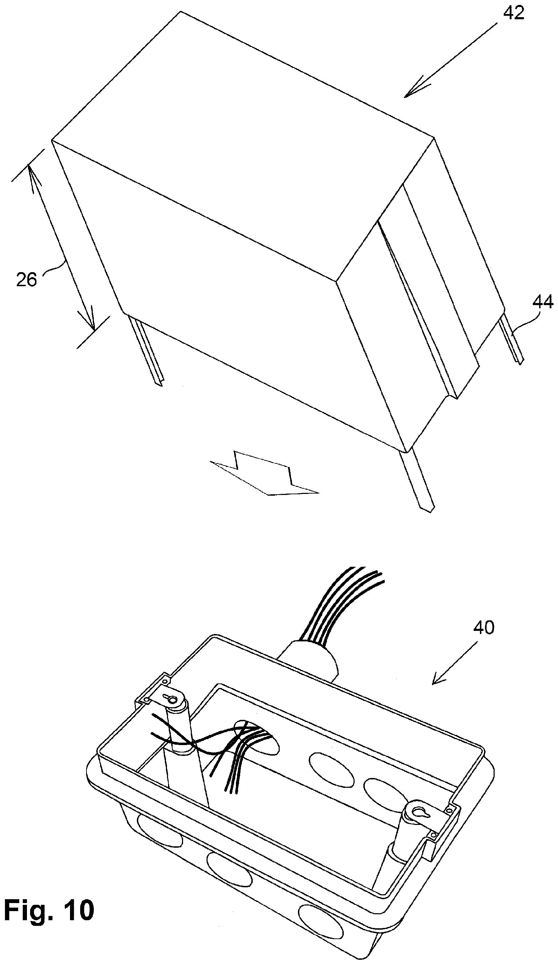

**Fig. 10** schematically illustrates a wall terminal box 40 and a cover thereof 42, according to one embodiment of the invention.

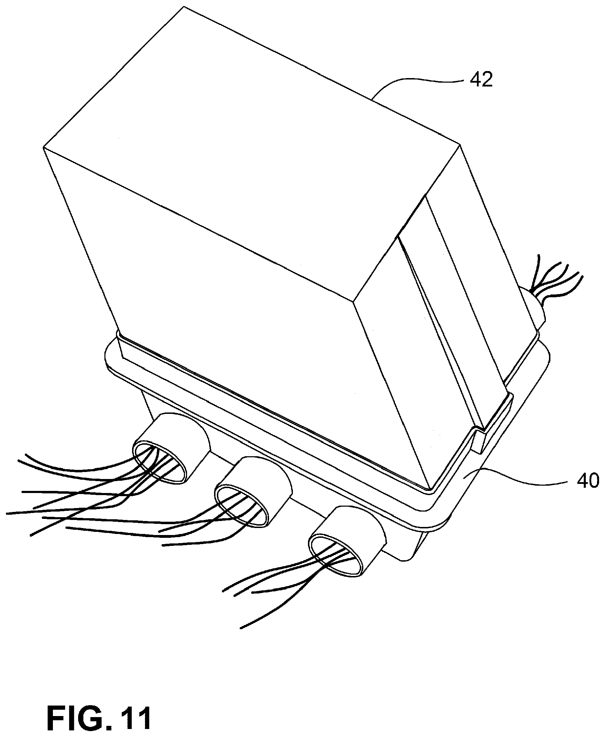

**Fig. 11** schematically illustrates a wall terminal box 40 mated with cover thereof 42, according to one embodiment of the invention.

The height 26 of the cover 42 is planned to be greater than the thickness of the plastering layer of the walls of the room and therefore salient after the plastering action. As a result, the location of the wall terminal boxes is easy to detect after the plastering action, and then the cover can be removed. Furthermore, the interior side of the wall terminal box remains clean.

Preferably, the cover comprises a closure (not illustrated), for preventing the cover 42 from detaching from the wall terminal box. Such a closure may be based on a hook, screw, etc.

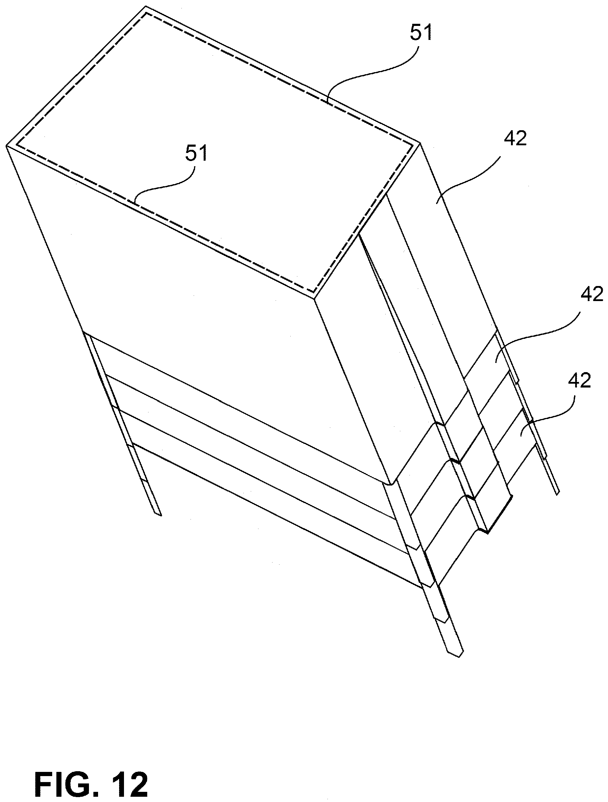

**Fig. 12** schematically illustrates a wall terminal box cover 42, according to one embodiment of the invention.

The walls of wall terminal box cover 42 form a cone, in order to allow integrating a plurality of boxes into one another, in order to save space.

It should be noted that although the base of the wall terminal box covers illustrated herein is quadrangular, it may be also circular and other forms.

Reference numeral 51 denotes a perforation line on the top/bottom facet of box 42. Instead of pulling out the entire box 42, a user can break the perforated facet of the box along the perforation line 51.

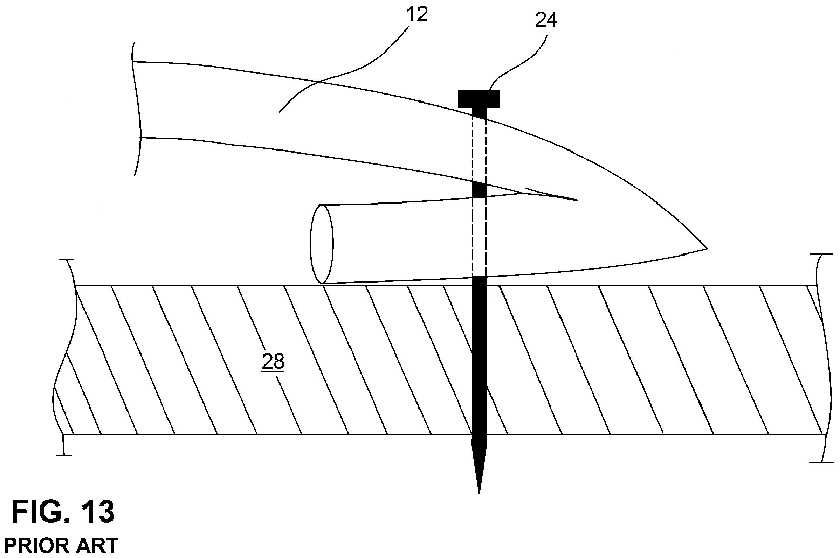

**Fig. 13** schematically illustrates an infrastructure pipe 12 before pouring thereon plastering material, according to the prior art.

As illustrated, the infrastructure pipe 12 is folded, and a nail 24 connects it to a board 28.

After pouring thereon casting material (e.g., concrete in liquid aggregation state, not illustrated), such as concrete, the nails 24 are pulled out and the infrastructure pipe 12 is drawn down from the ceiling.

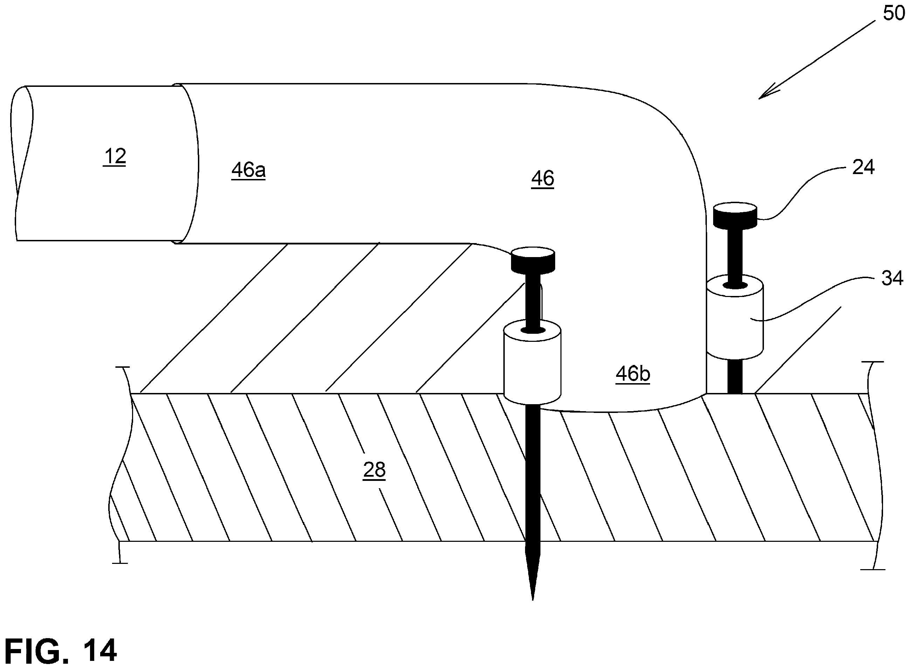

**Fig. 14** schematically illustrates an angular adapter 50, according to one embodiment of the invention.

Angular adapter 50 comprises an angular pipe 46 having a first pipe 46a and a second pipe 46b, wherein the outer diameter of the pipes 46a and 46b correspond to the diameter of an infrastructure pipe 12 (i.e., allow mating thereof).

The length of the first pipe 46a is at least 5 cm, in order to prevent unintentional separation thereof.

At the second end 46b is attached at least one bracket 34, for allowing connecting this end to a board 28 by nails 24, before pouring of plastering material. The nails retain the end of pipe 46b attached to the board.

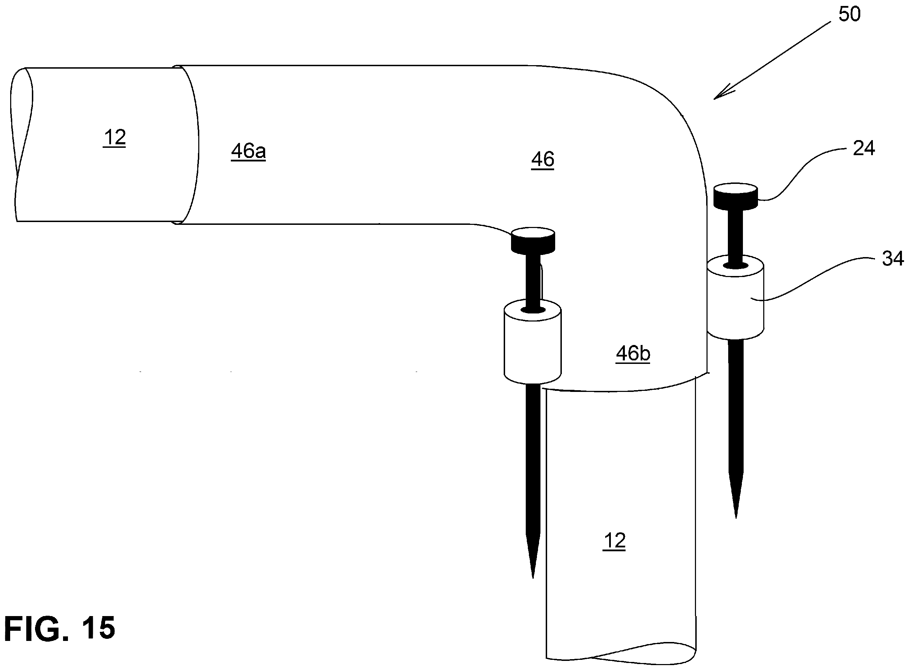

Thus, upon removing the board 28, when the plastering material hardens, the end of the angular pipes is exposed, and therefore an infrastructure pipe 12 can be mated with the angular pipe 46 of adapter 50, as illustrated in Fig. 15. The nails can be cut off.

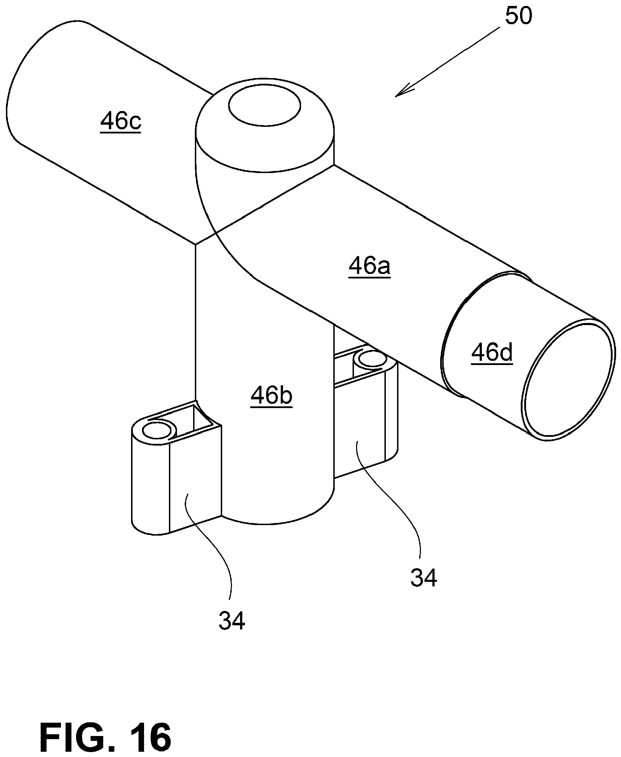

**Fig. 16** schematically illustrates an angular adapter 50, according to a further embodiment of the invention.

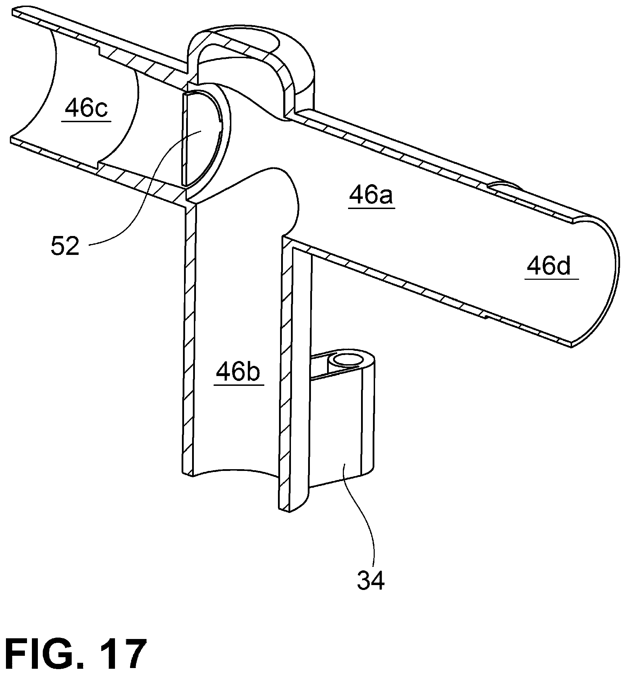

**Fig. 17** schematically illustrates a longitudinal cross-section thereof.

As illustrated, adapter 50 comprises three pipes: 46a, 46b and 46c. Pipe 46c is used for connecting two adapters 50 in line. For this purpose the external diameter of pipe 46a at region 46d is as the diameter of external pipe 46c.

Reference numeral 52 denotes a breakable seal. A user may break the seal 52 in order to generate free passage in its location. The seal is the element that converts the adapter 50 from being used as an angular adapter to a linear adapter.

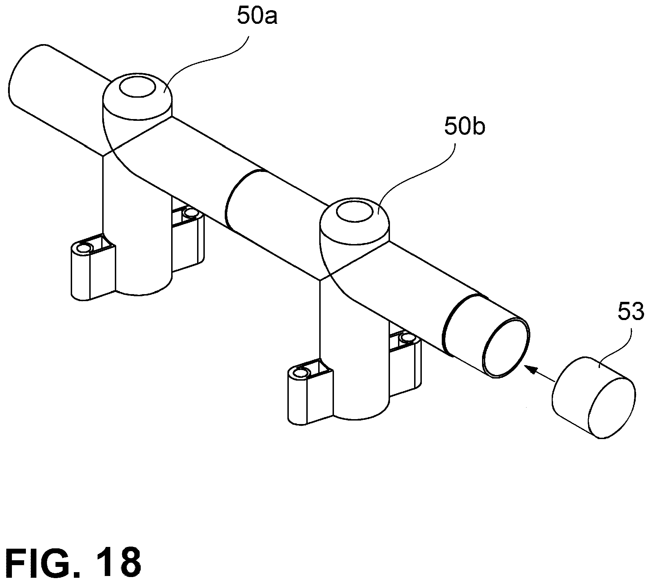

**Fig. 18** schematically illustrates two angular adapters 50a and 50b connected in line, according to a further embodiment of the invention.

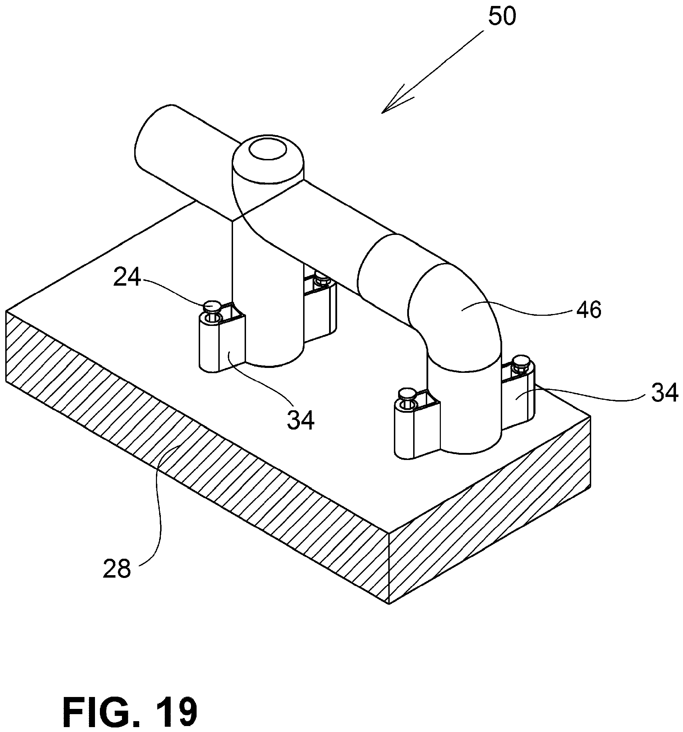

**Fig. 19** schematically illustrates an angular adapter 50 attached to a board before pouring thereon plastering material, according to a further embodiment of the invention.

Thus, the angular adapter (50) further comprises: an additional pipe (46c), opposite to a horizontal pipe (46a) of the angular adapter; a breakable seal (52) disposed between two of the horizontal pipes, thereby by breaking the seal, changing the adapter from providing an angular conduit functionality to providing a linear conduit functionality; wherein an inner diameter of one of the pipes is equal to an external diameter of an opposite pipe thereof, thereby allowing connecting two angular adapters for providing an extended linear conduit.

Reference numeral 53 denotes a lid of pipe. The lid prevents from plastering material to enter into the pipe.

In the figures and/or description herein, the following reference numerals (Reference Signs List) have been mentioned:
- numeral 10 denotes a wall;
- numeral 12 denotes an infrastructure pipe;
- numeral 14 denotes an electrical wire;
- numeral 16 denotes a junction of electrical wires;
- numeral 18 denotes a terminal;
- numeral 20 denotes a junction box;
- numeral 22 denotes an electricity infrastructure pipe entry;
- numeral 24 denotes a nail;
- numeral 28 denotes a board;
- numeral 30 denotes casting material (e.g., concrete in liquid aggregation state);
- numeral 32 denotes an adapter;
- numeral 32a denotes a pipe;
- numeral 32b denotes a pipe;
- numeral 34 denotes a bracket;
- numeral 36 denotes a connecting wire;
- numeral 38 denotes a wall;
- numeral 40 denotes a wall terminal box;
- numeral 42 denotes a wall terminal box cover;
- numeral 44 denotes legs of cover 42;
- numeral 46 denotes an angular pipe;
- numeral 46a denotes a pipe of the angular pipe 46;
- numeral 46b denotes a pipe of the angular pipe 46;
- numeral 46c denotes an additional pipe of the angular pipe 46;
- numeral 48 denotes a hole;
- numeral 50 denotes an angular adapter;
- numeral 51 denotes a perforation line;
- numeral 52 denotes a breakable seal; and
- numeral 53 denotes a lid.

The foregoing description and illustrations of the embodiments of the invention has been presented for the purposes of illustration. It is not intended to be exhaustive or to limit the invention to the above description in any form.

Any term that has been defined above and used in the claims, should to be interpreted according to this definition.

The reference numbers in the claims are not a part of the claims, but rather used for facilitating the reading thereof. These reference numbers should not be interpreted as limiting the claims in any form.

## Claims

1. An electricity network infrastructure of a room, the infrastructure comprising at least one device selected from a group consisting of:
a ceiling junction box (20) comprising:
- a plurality of infrastructure pipe entries (22);
- an adapter (32) for connecting one of said pipe entries (22) to an infrastructure pipe (12); and
- a bracket (34) connected to each of said adapters (32), for securing said opposite adapters (32) to each other;
a wall terminal box (40), comprising:
- at least one hole (48), wherein the diameter of which corresponds with an external diameter of an infrastructure pipe (12);
- a cover (42), wherein a height (26) of which being salient from a plastering layer on which it is applied to;
and an angular adapter (50), comprising:
- an angular pipe (46), wherein the entries thereof correspond to an infrastructure pipe (12);
- at least one bracket (34) connected to the other end thereof, for securing said angular pipe (46) by a nail to a board (28) on which casting material is poured.

2. An infrastructure according to claim 1, wherein said adapter (32) has a length of at least 5 cm, for preventing unintentional separation of an infrastructure pipe (12) therefrom.

3. An infrastructure according to claim 1 or 2, wherein said wall terminal box (40) comprises a closure for securing said cover (42) to said wall terminal box (40).

4. An infrastructure according to any preceding claim, wherein said securing said opposite adapters (32) to each other is carried out by a wire (36).

5. An infrastructure according to any preceding claim, wherein said casting material is concrete.

6. An infrastructure according to any preceding claim, wherein said pipe (46a) of the angular pipe (46) has a length of at least 5 cm, for preventing unintentional separation of an infrastructure pipe (12) thereof.

7. An infrastructure according to any preceding claim, wherein said angular pipe (46) is rigid.

8. An infrastructure according to any preceding claim, wherein said angular adapter (50) further comprises:
- an additional pipe (46c), opposite to a horizontal pipe (46a) of said angular adapter;
- a breakable seal (52) disposed between two of the horizontal pipes, thereby by breaking said seal, changing said adapter from providing an angular conduit functionality to providing a linear conduit functionality;
- wherein an inner diameter of one of said pipes is equal to an external diameter of an opposite pipe thereof, thereby allowing connecting two angular adapters for providing an extended linear conduit.

9. An infrastructure according to any preceding claim, wherein said cover (42) comprises a perforated facet along the edges thereof, thereby allowing breaking said facet along the perforation line and removing said facet instead of removing the cover.
